# EUROPÄISCHE PATENTANMELDUNG

(11) **EP 0 825 696 A2**
(43) Veröffentlichungstag der Anmeldung: **25.02.1998**
(21) Anmeldenummer: 97113830.0
(22) Anmeldetag: 11.08.1997
(51) Int. Cl.: H02B 1/21

(54) **Plattenförmiger Adapter zur Montage eines Installationsgerätes**

(30) Priorität: 17.08.1996 DE 29614256 U
(71) Anmelder: ABB PATENT GmbH, 68309 Mannheim (DE)
(72) Erfinder: Leible, Erwin, 69434 Hirschhorn (DE)
(74) Vertreter: Rupprecht, Klaus, Dipl.-Ing.

(57) **Zusammenfassung**

Die Erfindung betrifft einen plattenförmigen, langgestreckt rechteckigen Adapter (10) zur Montage eines Installationsgerätes, vorzugsweise eines Leitungsschutzschalters, in einer Installationsverteilung mit wenigstens einer DIN-Hutptofiltragschiene, auf einer Tragschiene (20, 21, 22) oder zwei oder mehr parallel zueinander verlaufenden Tragschienen (20 bis 22), wobei die Längserstreckung des Adapters (10) quer zur Längserstreckung der Tragschienen (20 bis 22) ausgerichtet ist. Der Adapter (10) weist auf einer Seitenfläche (12) je eine entlang der Längsseitenkante angeformte Leiste (15, 16) auf, die Aussparungen besitzen (17, 18, 19), in die die Hutprofilschienen (21; 20, 22) im montierten Zustand eingreifen. Die an der Schmalseitenkante (26) benachbarte Endkante (27) der dort befindlichen Aussparung (17) besitzt eine feststehende Nase (28) zum Hintergreifen der dort befindlichen Hutprofiltragschiene (20) und auf der Seitenfläche (12) des Adapters (10), auf der sich die Leisten (15, 16) befinden, sind Rastarme vorgesehen (36; 33, 34; 40), mit denen der Adapter (10) zusammen mit den Kanten der Aussparungen (17, 18, 19) hinter die Längskanten der Hutprofilschienen (21; 20, 22) verrastbar ist.

## Beschreibung

Die Erfindung betrifft einen plattenförmigen Adapter gemäß dem Oberbegriff des Anspruches 1.

Für die Montage eines selektiven Hauptleitungsschutzschalters nach DIN VDE 0645 auf Hutprofilschienen gemäß DIN EN 50022 in Installationsverteilern, insbesondere in Zählerplätzen nach DIN 43870, Teil 2, im unteren Anschlußraum kommen zwei Einbaumöglichkeiten vor: der selektive Hauptleitungsschutzschalter kann auf einer DIN-Hutprofiltragschiene oder auf zwei DIN-Hutprofiltragschienen montiert werden. Demgemäß sind zwei Adapter zur Montage des Schalters vorgesehen; einer der Adapter dient zur Befestigung auf einer Hutprofiltragschiene und ein anderer Adapter mit anderer Bauweise ist geeignet, den Adapter auf zwei Hutprofiltragschienen zu befestigen.

Aus der DE 35 10 207 C2 ist ein Adapter der eingangs genannten Art bekannt geworden, mit dem eine Montage sowohl auf zwei als auch auf einer Hutprofiltragschiene ermöglicht ist. Der dort beschriebene, bekannte Adapter ist, da er aus mehreren Teilen besteht, nämlich einer Grundplatte, einem Rastschieber, einer Haltefeder und Befestigungsschrauben, aufwendig herzustellen.

Aufgabe der Erfindung ist es, einen Adapter der eingangs genannten Art zu schaffen, der sehr einfach aufgebaut ist und die Montage eines Installationsgerätes sowohl auf einer als auch auf zwei Hutprofiltragschienen ermöglicht.

Diese Aufgabe wird erfindungsgemäß gelöst durch die kennzeichnenden Merkmale des Anspruches 1.

Erfindungsgemäß also besitzt der Adpater auf einer Seitenfläche entlang der Längsseitenkanten angeformte Leisten, die Aussparungen aufweisen, in die die Hutprofilschienen einsetzbar sind bzw. in die die Hutprofilschienen in montierter Lage eingreifen; diejenige Endkante der Aussparung, die der Schmalseitenkante benachbart ist, ist so geformt, daß sie eine feststehende Nase für die Hutprofiltragschiene besitzt. Weiterhin sind auf der Seitenfläche des Adapters, auf der sich die Leisten befinden, Rastarme vorgesehen, mit denen der Adapter zusammen mit den Kanten der Aussparungen, die parallel zur Seitenfläche des Adapters verlaufen, hinter die Kanten der Hutprofiltragschienen verrastbar ist.

Damit ist es möglich, einen Adapter zu schaffen, der sowohl auf einer Hutprofiltragschiene als auch auf zwei parallel zueinander verlaufenden Hutprofiltragschienen befestigt werden kann.

In bevorzugter Weise können gemäß Anspruch 2 im plattenförmigen Adapter Öffnungen vorgesehen sein, durch die hindurch die Rastarme mittels eines Werkzeuges zugänglich und von den Hutprofiltragschienen frei schwenkbar sind.

Weitere vorteilhafte Ausgestaltungen und Verbesserungen der Erfindung sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen und weitere Vorteile näher erläutert und beschrieben werden.

Es zeigen:
- Fig. 1: eine Aufsicht auf einen erfindungsgemäßen Adapter,
- Fig. 2: eine Seitenansicht gemäß Pfeilrichtung II der Fig. 1,
- Fig. 3: eine Schnittansicht gemäß Schnittlinie III-III der Fig. 1,
- Fig. 4: eine Schnittansicht gemäß Schnittlinie IV-IV der Fig. 1, und
- Fig. 5: eine Schnittansicht gemäß Schnittlinie V-V der Fig. 1

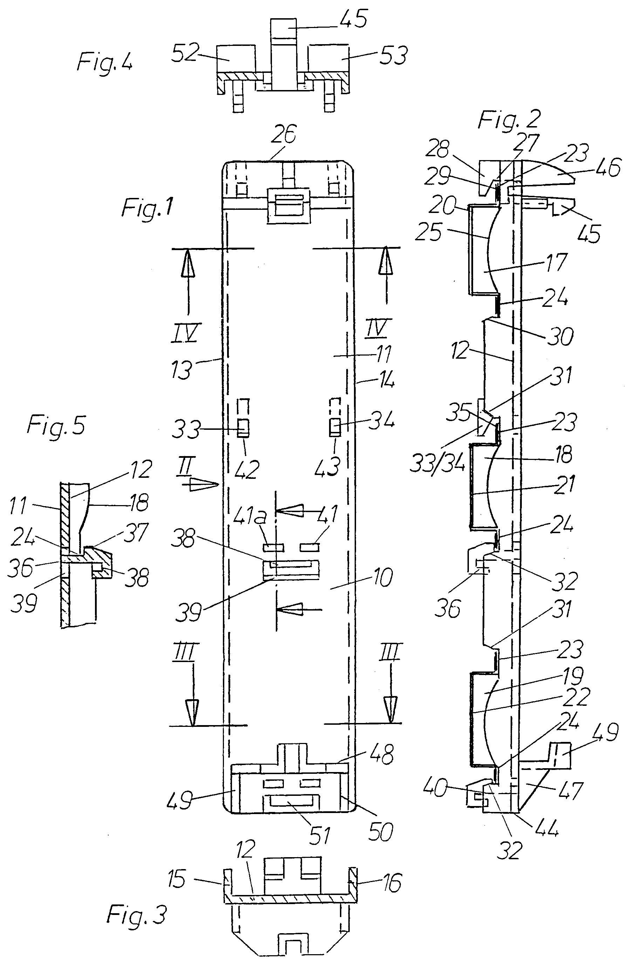

Ein erfindungsgemäßer Adapter 10 besitzt eine rechteckig langgestreckte Basisplatte 11, auf deren der Zeichenebene abgewandten Seitenfläche 12 an den Längsseitenkanten 13, 14 der Basisplatte senkrecht dazu verlaufende Leisten 15 und 16 angeformt sind, die Aussparungen 17, 18, 19 aufweisen, in die im montierten Zustand nach Bedarf (siehe unten) Hutprofiltragschienen 20, 21 und 22 eingreifen. Diese Hutprofiltragschienen verlaufen in einem Zählerplatz im unteren Raum in horizontaler Richtung und parallel zueinander. In der Fig. 1 sind diese Hutprofiltragschienen 20, 21 und 22 nicht dargestellt.

Alle Aussparungen 17, 18 und 19 besitzen parallel zur Seitenfläche 12 verlaufende Kantenabschnitte 23 und 24 (hier werden für alle drei Aussparungen 17 bis 19 die gleichen Bezugsziffern verwendet), zwischen denen ein bogenförmiger, bezogen auf die Basisplatte 11 konvexer Kantenabschnitt 25 liegt.

Die der Schmalseitenkante 26 benachbarte Endkante 27 der Aussparung 17 besitzt eine Nase 28 bzw. ist mit einer feststehenden Nase 28 versehen, hinter die die eine Längsseitenkante 29 der Hutprofilschiene 20 greift.

Die gegenüberliegende Endkante 30 der Aussparung 17 ist abgeschrägt und bildet mit dem Abschnitt 24 einen stumpfen Winkel.

Die Aussparungen 18 und 19 besitzen Endkanten 31 und 32, die ebenfalls miteinander einen spitzen Winkel bzw. mit den Abschnitten 23 bzw. 24 einen stumpfen Winkel bilden.

Im Bereich der Kante 31 der Aussparung 18 sind zwei Rastarme 33, 34 angeformt, die in der Nähe der Leisten 15 und 16 liegen und die mit dem Abschnitt 23 der Aussparung 18 eine bewegbare Nase bilden, hinter die die entsprechende Kante 35 der Hutprofilschiene 21 greifen kann. Die beiden Rastarme 33 und 34 zur Bildung der Nase sind auf der Seitenfläche 12 angeformt.

Im Bereich der Kante 32 der Aussparung 18 befindet sich mittig ein Rastarm, der in Fig. 5 näher dargestellt ist. Auf der Seitenfläche 12 der Basisplatte 11 also ist ein Rastarm 36 angeformt, der senkrecht zur Basisplatte 11 verläuft. An der Seite des Rastarmes, die in die Aussparung 18 hineinragt, ist eine Rastnase 37 angeformt, die von dem Bereich 24 bzw. Abschnitt 24 der Aussparung 18 in einem Abstand entfernt ist, der der Dicke der Hutprofiltragschiene 21 entspricht. Auf der Rückseite besitzt der Rastarm 36 eine U-förmige Tasche 38, die hin zu der Seitenfläche 12 offen ist und die im Bereich einer Öffnung 39 liegt, durch die die Tasche 38 mittels eines Werkzeuges von der Seitenfläche der Basisplatte 11 aus zugänglich ist, die der Seitenfläche 12 mit den Leisten entgegengesetzt liegt.

Die Öffnungen 41 und 41a bzw. 42 und 43 sind fertigungsbedingte Öffnungen, durch die ein Schieber eines Werkzeuges zur Herstellung des Adapters 10 hindurchgreifen kann.

Ein dem Rastarm 36 entsprechender Rastarm 40 befindet sich an der Schmalseitenkante 44, die der Schmalseitenkante 26 entgegengesetzt liegt.

Auf der oberen Seitenfläche, das ist diejenige Seitenfläche, die derjenigen mit den Leisten 15, 16 entgegengesetzt liegt, ist ein Rastelement 45 vorgesehen, mit dem ein Installationsgerät auf dem Adapter fixierbar ist. Damit das Rastelement 45 nicht beschädigt wird, wenn das Installationsgerät aufgeschnappt wird, ist eine Stützwand 46 vorgesehen.

Im Bereich der entgegengesetzt liegenden Schmalseite 44 ist ein weiteres Rastelement 47 mit einer Rastwand 48 und einem Rastvorsprung 49 vorgesehen. Zur Verhinderung einer Beschädigung der Rastwand 48 sind schräg verlaufende Stützwände 49 und 50 vorgesehen. Innerhalb der Stützwände 49 und 50 ist eine Öffnung 51 vorgesehen, die der Öffnung 39 gleicht, so daß durch die Öffnung 51 der Rastarm 40 zugänglich ist.

Aus Fig. 4 ist ersichtlich, daß beidseitig zu dem Rastelement 45 Halterungswände 52 und 53 angeformt sind, die in einer Linie liegen und die zur Führung des Installationsgerätes dienen.

Der beschriebene erfindungsgemäße Adapter 10 kann nun entweder auf der mittleren Tragschiene 21 befestigt werden, wobei der Adapter 10 mittels der Rastarme 33/34 und dem Rastarm 36 auf der Tragschiene 21 festgerastet wird. Er kann auch auf den beiden Tragschienen 20 und 22 fixiert werden, in dem er mittels der festen Nase 28 und dem Rastarm 40 an den Tragschienen 20 und 22 festgerastet wird. Ggf. könnte der Adapter auch auf allen drei Tragschienen 20, 21, 22 fixiert werden.

Nachzutragen ist, daß die Aussparungen 17, 18, 19 mit den Nasen 28 und den Endkanten 30, 31, 32 an beiden Leisten 15, 16 angerodnet sind.

## Patentansprüche

1. Plattenförmiger, langgestreckt rechteckiger Adapter zur Montage eines Installationsgerätes, vorzugsweise eines Leitungsschutzschalters, in einer Installationsverteilung mit wenigstens einer DIN-Hutprofiltragschiene, auf einer Tragschiene oder zwei oder mehr parallel zueinander verlaufende Tragschienen, wobei die Längserstreckung des Adapters quer zur Längserstreckung der Tragschienen ausgerichtet ist, dadurch gekennzeichnet, daß der Adapter (10) auf einer Seitenfläche (12) je eine entlang der Längsseitenkanten angeformte Leiste (15, 16) aufweist, die Aussparungen (17, 18, 19) besitzen, in die die Hutprofilschienen (21; 20, 22) im montierten Zustand eingreifen, daß die einer Schmalseitenkante (26) benachbarte Endkante (27) der dort befindlichen Aussparung (17) eine feststehende Nase (28) zum Hintergreifen der dort befindlichen Hutprofilschiene (20) besitzt, und daß auf der Seitenfläche (12) des Adpaters (10), auf der sich die Leisten (15, 16) befinden, Rastarme (36; 33, 34; 40) vorgesehen sind, mit denen der Adapter (10) zusammen mit den Kanten der Aussparungen (17, 18, 19) hinter die Längskanten der Hutprofilschienen (21; 20, 22) verrastbar ist.

2. Adapter nach Anspruch 1, dadurch gekennzeichnet, daß Öffnungen (39, 51) vorgesehen sind, durch die hindurch die Rastarme (33, 34; 40) von der Seitenfläche aus, die der (12) mit den Rastarmen (33, 34; 40) entgegengesetzt liegt, mittels eines Werkzeuges zugänglich sind, so daß die Rastarme (33, 34; 40) von den Hutprofilschienen (20, 21, 22) frei schwenkbar sind.

3. Adapter nach einem der vorherigen Ansprüche, dadurch gekennzeichnet, daß auf der Seitenfläche, die der mit den Leisten entgegengesetzt liegt, Rastelemente (45, 46; 47) für die Halterung des Installationsgerätes angeformt sind.
